# EUROPÄISCHE PATENTSCHRIFT

(11) **EP 2 490 553 B1**
(45) Veröffentlichungstag und Bekanntmachung des Hinweises auf die Patenterteilung: **07.12.2016**
(21) Anmeldenummer: 10768025.8
(22) Anmeldetag: 20.10.2010
(51) Int. Cl.: A23L 33/10, A23L 13/40, A23L 13/60, A23L 17/00

(54) **WURSTWAREN**
SAUSAGE PRODUCTS
CHARCUTERIE

(30) Priorität: 21.10.2009 DE 102009050245
(43) Veröffentlichungstag der Anmeldung: 29.08.2012
(73) Patentinhaber: NUSKE, Andreas, 78166 Donaueschingen (DE)
(72) Erfinder: NUSKE, Andreas, 78166 Donaueschingen (DE)
(74) Vertreter: dompatent von Kreisler Selting Werner - Partnerschaft von Patent- und Rechtsanwälten mbB
(86) Internationale Anmeldenummer: PCT/EP2010/065827
(87) Internationale Veröffentlichungsnummer: WO 2011/048160

(56) Entgegenhaltungen:
- EP-A1- 1 161 885
- WO-A1-02/074105
- WO-A1-2010/139292
- DE-A1-102007 025 847
- DE-U1- 29 719 022
- NONGNUCH RAKSAKULTHAI ET AL.: "Production and storage of Chinese style fish sausage from hybrid Clarias catfish", KASETSART JOURNAL, Bd. 38, 31. März 2004 (2004-03-31), Seiten 102-110, XP002616382,
- OKSUZ ABDULLAH ET AL.: "Production of a dry sausage from African catfish (Clarias gariepinus,Burchell, 1822): microbial, chemical and sensory evaluations", INTERNATIONAL JOURNAL OF FOOD SCIENCE & TECHNOLOGY, Bd. 43, 20. Dezember 2007 (2007-12-20), Seiten 166-172, XP002616383,
- PANPIPAT ET AL: "Stability of potassium iodide and omega-3 fatty acids in fortified freshwater fish emulsion sausage", LEBENSMITTEL WISSENSCHAFT UND TECHNOLOGIE, ACADEMIC PRESS, LONDON, GB, Bd. 41, Nr. 3, 27. November 2007 (2007-11-27), Seiten 483-492, XP022365075, ISSN: 0023-6438, DOI: DOI:10.1016/J.LWT.2007.03.013
- Juliana Pola Duraes: "Obtençao, caracterizaçao da carne mecanicamente separada de barge africano (Clarias Gariepinus) e avaliaçao de sua estabilidade durante estocagem sob congelamento", , 1. Januar 2009 (2009-01-01), Seiten 1-71, XP002616384, Gefunden im Internet: URL:http://scholar.google.de/scholar?hl=de &q=luliana+pola+duraes+clarias&lr=&as_ylo= &as_vis=0 [gefunden am 2011-01-12]
- IKEDA I ET AL: "Lymphatic transport of eicosapentaenoic and docosahexaenoic acids as triglyceride, ethyl ester and free acid, and their effect on cholesterol transport in rats", LIFE SCIENCES, PERGAMON PRESS, OXFORD, GB, vol. 52, no. 16, 1 January 1993 (1993-01-01), pages 1371-1379, XP023767517, ISSN: 0024-3205, DOI: 10.1016/0024-3205(93)90172-Y [retrieved on 1993-01-01]

## Beschreibung

Die vorliegende Erfindung betrifft eine Rohmasse zur Herstellung von Fleischbrät, ein Verfahren zur Herstellung **der Rohmasse** daraus und deren Verwendung als **Nahrungsmittel.**

Bisherige Wurstwaren haben die Nachteile, dass sie zum einen einen hohen Fettanteil haben und in Relation bei sportlicher Ertüchtigung die physiologische Eiweißkonzentration pro 100 g eindeutig zu gering ist, und zum anderen vor allem fast ausschließlich gesättigte Fettsäuren aufweisen und daher Herz- und Kreislaufkrankheiten verursachen oder zumindest beschleunigen. Für die Vermarktung in den Bereichen Gesundheit, Fitness oder Wellness eignen sich daher bisherige Wurstwaren nur rudimentär.

DE 10 2007 025 847 A1 beschreibt ein Verfahren zur Herstellung von Wurstwaren basierend auf Fischfleisch und Wurstwaren beinhaltend Fischfleisch. Die Druckschrift betrifft insbesondere ein Verfahren zur Herstellung von Wurstwaren basierend auf Fischfleisch, wobei das Fischfleisch zusammen mit Eis zu einem Grundbrät verarbeitet wird.

Hierbei wird das Eis, das eine Temperatur <-10°C aufweist und wenigstens ein Teil des Fischfleischs von einem Süßwasserwels der Überklasse Heterobranchidae miteinander gemischt.

WO 2006/094475 A1 beschreibt ein Verfahren zur Herstellung fettarmer Wurst ohne Beimengung zusätzlicher "Leerfette" (der Begriff Leerfette umfasst insbesondere saturierte bzw. gesättigte Fettsäuren, insbesondere die gesättigten Fettsäuren, wie sie beispielsweise in fetten Bauchspeck, Schwarte, Euter oder Schweineohren, enthalten sind) aber unter Inkaufnahme von erheblichen Geschmackseinbußen, da Fette im Allgemeinen ein idealer Geschmacksträger und nicht durch Pflanzenproteine ersetzbar sind.

Die der Erfindung zugrunde liegende Aufgabe besteht darin, ein fleischmixbasiertes Nahrungsmittel **(Fleischbrät)** bereitzustellen, das insgesamt auf Beimengung von üblichen Leerfetten verzichtet und dieses durch Zuführung von magerem, jedoch mit einem hohem Gehalt an natürlichen in Frischfleisch vorhandenen marinen Omega-3-Fettsäuren (essentielle Fettsäuren) Fischfleisch besonderer Fischgattungen und bei Bedarf Beimengung von essentiellen pflanzlichen und marinen Omega-3-Fettsäuren in Form von Triglyceriden und/oder deren Ethylestern (Modulationsmöglichkeiten) sowie Pflanzenproteinisolaten, wasser- und/oder löslichen Antioxidantien kompensiert, damit vier Dinge erzielt werden:
1. ein Optimum an Geschmack,
2. Vermeidung von Zivilisationskrankheiten auch bei höheren Konsum und Erzielung im besten Falle sogar einer positiver Wirkung (z.B. Cholesterinsenkung),
3. kontinuierliche d.h. über 24 Std. mögliche Verstoffwechselung durch die Kombination von marinen Omega-3-Fettsäuren (EPA und DHA; Triglyceridbasis) resultierend aus dem verwendeten Fischfleisch und dem zusätzlich beigemengten Omega-3-Ethylester-Fettsäuren in reinster Form (annähernd 100%). Verfahren zur Herstellung eines Fettsäurealkylesters beispielsweise durch Umesterung von Triglyceriden, die in einer Vielzahl von Ölen und Fetten enthalten ist, sind hinlänglich bekannt, beispielsweise aus der DE 699 31 897 T2. Gegenüber Triglyceriden haben Omega-3-Fettsäure-Ethylester den Vorteil, dass sie hydrophiler und deshalb besser in Emulsionen einbindbar sind. Retardwirkung, d.h. die Aufnahme bzw. Verstoffwechselung von Omega-3-Fettsäuren-Ethylester erfolgt kontinuierlicher in 24. Std., als die natürlichen, auf Triglyceridbasis aufgebauten Omega-3-Fettsäuren, (Ikuo Ikeda. Lymphatic transport of EPA und DHA acids astriglyceride, Ethyl Ester and free Acid, and their effect on cholesterol transport in rats. Life Sciences, Vol. 52, pp. 1371-1379)
4. Erhebliche Verbesserung der Geschmackseigenschaften während der Lagerdauer, insbesondere von Schnittwürsten, die nach Abschluss des Herstellungsprozesses der Produkte eindeutig über das normale Maß vergleichbarer Produkte hinaus stabil bleiben (Unterbindung des natürlichen Verfalls durch den gewöhnlichen Reifeprozess bei Brüh- und Kochwürsten)

Die der Erfindung zugrunde liegende Aufgabe wird in einer ersten Ausführungsform mit den Merkmalen des Anspruchs 1 gelöst.

Nach langen Untersuchungsreihen zur Identifikation der optimalen Fischgattungen zur Beimengung zum klassischen Wurst-/Hackfleischbrät auf Fleisch und/oder Pflanzenbasis, war insbesondere durch den Verzicht auf Beimengung von Leerfetten eine Verbesserung der Geschmacksintensität des verwendeten Ausgangsfleisch a) sowie der Eiweißaufschluss, Bindungsqualitäten mit anderen Proteinträgern, Wassergehalt, Konsistenz des Fischfleisches, natürlicher in Relation zum Gesamtfettgehalt (geringer Anteil an Leerfetten) unerwartet hohen Anteil an marinen Omega-3-Fettsäuregehalt (EPA und DHA), Mineralienanteil, Vitamingehalt (insbesondere Vit. D) und nicht zuletzt dem Vorhandensein des unangenehmen Fischgeschmacks (fischeln) von entscheidender Bedeutung. Die erfindungsgemäß herauskristallisierten Fischgattungen sind clarias garipinus und heterobranchus longifilis einschließlich deren Kreuzungen. Zudem sind diese Fischspezies in ihrer Konsistenz dem Fleisch von Säugetieren sehr ähnlich. Diese Spezies weisen einen neutralen Geschmack und Geruch sowie eine extreme Festigkeit auf, die maßgeblich dazu beigetragen haben, dass das damit veredelte klassische Hackbrät ohne Zugabe von minderwertigen Füllstoffen wie Speck oder Schweinsohren (Leerfette) auskommt. Von allen Fischarten weisen die erfindungsgemäß eingesetzten das für die menschliche Ernährung beste Verhältnis der omega-3 versus Gesamtfettgehalt auf. Außerdem konnte festgestellt werden, dass deutlich weniger Gewürze und/oder Salze benötigt werden.

Die erfindungsgemäße Rohmasse enthält beispielsweise zusätzlich 0,1 bis 10 Gewichtsteile Eiweißkonzentrat in Form 4-Komponenten-Eiweiß aus Milch, Molken- [Lactalbumin, Lactglobulin] Hühner- und Pflanzen-Eiweiß (beispielsweise: Soja, Lupine, Erbse, Kartoffel) bezogen auf 100 Gewichtsteile der Bestandteile a), b) und c).

Die erfindungsgemäße Rohmasse enthält gegebenenfalls zusätzlich 0,001 bis 1,0 Gewichtsteile Vitamin D und/oder freie Aminosäuren L-Carnitin und/oder L-Arginin bezogen auf 100 Gewichtsteile der Bestandteile a), b) und c). Insbesondere ist in der Rohmasse 2 bis 10 g/g reines L-Argininpulver enthalten.

Die erfindungsgemäße Rohmasse enthält insgesamt mindestens 0,2 g pflanzliche alpha-Linolensäure und/oder Stearidonsäure, pro 100 g Fleisch und/oder Fleischersatz, insbesondere in Form der Triglyceride und/oder Fettsäure-Ethylester.

Die erfindungsgemäße Rohmasse enthält insgesamt mindestens 0,2 g Docosahexaensäure und/oder Eicosapentaensäure in Form derer Ethylester pro 100g Fleisch durch Mitverwendung von Fischfleisch ohne merklichen Fischgeschmack oder Fischgeruch beim Verarbeitungsvorgang (Kutter).

Alpha-Linolensäure wird im Folgenden auch als ALA (18:3)abgekürzt.

Stearidonsäure wird im Folgenden auch als STA (18:4)abgekürzt Docosahexaensäure wird im Folgenden auch als DHA (22:6) abgekürzt. Eicosapentaensäure wird im Folgenden auch als EPA (20:5) abgekürzt.

Die notwendigen Fettsäuren, insbesondere in Form der Fettsäure-Ethylester (feste [mikroverkapseltes Pulver oder Granulat] und/oder flüssige Darreichungsform), sind in üblichem Fleisch in dieser Konzentration nicht vorhanden. Durch deren Anreicherung in Nahrungsmitteln **(Fleischbrät)** kann die der Erfindung zu Grunde liegende Aufgabe gelöst werden.

Fleisch von Säugetieren und Fleischersatzstoffe im Sinne der Erfindung umfasst keinen Fisch.

Die erfindungsgemäße Rohmasse eignet sich besonders für die Herstellung von Nahrungsmitteln, die auch im Bereich Fitness vermarktet werden können. Grundsätzlich fettarme Wurstwaren und Hackfleischprodukte können so veredelt werden. Wurstwaren und Hackfleischprodukte werden zwar so etwas fettreicher, allerdings nur durch Zuführung von essentiellen Fettsäuren, nicht durch Zusatz cholesterinfördernder oder -bildender Leerfette. Zusätzlich liefern diese beiden genannten Fischspezies wichtige Aminosäuren und Vitamine, ohne gleichzeitig unerwünschte Begleitstoffe wie hohe Mengen an Leerfette, Cholesterin oder in der Nahrungsverwertung Harnsäure zu liefern.

Vor allem durch übermäßigen Konsum von Fleisch und Fleischprodukten mit hohem Gehalt an Leerfetten kommt es zu negativen Auswirkungen auf das Herz und insgesamt auf das Herz-Kreislaufsystem; dazu erhöhen diese noch das Risiko onkologischer Erkrankung, sowie eines erhöhten Cholesterinspiegels. Ersetzt man diesen übermäßigen Fleischkonsum teilweise durch essentielle Bestandteile aus Fisch- und Meeresprodukten (essentielle Fischöle und Eiweiße) sowie Pflanzenprodukte (essentielle Pflanzenöle und essentielle Pflanzenproteine), so verringert dies beispielsweise den Cholesterinspiegel, das Risiko von Arterienerkrankungen bei Männern und Frauen und von Gehirnschlag bei älteren Leuten.

Die Kombination von Fleischprodukten und/oder Fleischersatzprodukten mit essentiellen Pflanzenproteinisolaten (beispielsweise. aus Lupine, Erbse, Kartoffel, Soja, Linsen, Futterbohnen) und/oder Fischproteinen sowie essentiellen Omega-3-Fettsäuren von Pflanzen oder vom Fisch ist eindeutig nützlich, unterstützend und sinnhaft im Antiaging-Zeitalter. Ein genereller Vorteil der beiden Fischspezies ist ein niedriger Anteil von bindegewebehaltigen Strukturen in Relation zu ihren Eiweißgehalt. Außerdem ist das bindegewebehaltige Protein generell im Fisch hauptsächlich als Kollagen vorhanden, das in die gut auflösbare Form der Gelatine (Glutin) leichter übergeht. Deshalb zerkocht Fisch schnell, wird locker und damit leicht verdaulich. Dies ist auch der Grund dafür, dass 93% bis 98% Fischeiweiß aufgenommen wird, während die Aufnahme des Fleischeiweißes nicht mehr als 80% beträgt. Das Fettgewebe der Fische ist im Vergleich zu tierischem Fleisch reich an mehrfach ungesättigten Fettsäuren und enthält Mineralien wie Kalium, Magnesium und besonders Phosphor und das Spurenelement Selen.

In Deutschland gab es in 2005 insgesamt 367.361 Todesfälle durch Herz-/ Kreislauferkrankungen (Frauen 215.087; Männer 152.274).

Diese Statistik spricht eine deutliche Sprache. Unter allen Todesursachen nimmt diese damit mit Abstand den ersten Platz ein. Experten kritisieren in diesem Zusammenhang, dass Maßnahmen zur Prävention und Rehabilitation (= ist eine conditio sine qua non) annähernd komplett vernachlässigt werden. Insbesondere die unabdingbare Aufklärung und aktive Bewusstseinsänderungen innerhalb der Bevölkerungen hinsichtlich Ernährungs- und Bewegungsgewohnheiten finden nur rudimentär statt.

Auf der anderen Seite verordnen Ärzte immer mehr Medikamente wie etwa blutdrucksenkende Mittel oder Pillen gegen hohe Cholesterinwerte (wie beispielsweise die Medikamentengruppe der Cholesterinsenker [=Statine]).

Um diesen Negativkreislauf zu unterbrechen und positiv entgegenzusteuern, wurde diese der Erfindung zu Grunde liegende Idee - zumindest teilweise Substitution Nahrungsmittel aus Fleisch (Würste und Hackfleisch) durch das Hinzufügen essentieller Bestandteile aus dem Fisch entwickelt; damit wird es gelingen, das tradierte und wissenschaftlich überholte Konsumverhalten (maßloser krankheitsfördernder Fleischprodukteverzehr) zu verändern, um einen gesamtvolkswirtschaftlichen Nutzen (Steigerung des allgemeinen Gesundheitszustand in der Bevölkerung) zu erzielen. Mit dieser Idee - Wurstprodukte wie beispielsweise Brühwürste, Kochwürste und Rohwürste sowie Hackfleischprodukte durch den essentiellen Rohstoff aus Fisch und Pflanzenprodukten zumindest teilweise sinnhaft zu ergänzen - wird mittelbar insgesamt eine Sensibilisierung in der westlichen Bevölkerung hinsichtlich der Auswahl ihrer Nahrungsmittel herbeigeführt. Dieses war durch die bisherige, in Relation zum Fleisch äußerst begrenzte Verarbeitungs-Möglichkeit des Rohstoffes Fisch unmöglich. Dieses fehlende Bindeglied ("missing link") in der Nahrungsmittelverarbeitung wird nunmehr durch die zugrundeliegende Idee geschlossen. Dadurch wird der Konsument erstmalig in seiner Evolution mit einer auf essentielle Bestandteile veredelten Fleischwurst und Hackfleisch-Produkten konfrontiert, die in der Summe der oben aufgeführten Eigenschaften, den geforderten Erwartungen von Nahrungsmittelexperten entspricht.

Die mehrfach ungesättigten Fettsäuren sind unentbehrlicher Bestandteil unserer Zellen und Grundbestandteil für Hormone. Sie stecken in verschiedenen hochwertigen Pflanzenölen und fetteren Fischsorten wie Lachs, Makrele, Sardine und Hering. Gesättigte Fettsäuren (Leerfette) wie in Butter, Schmalz, Käse, Wurst und Fleisch aber auch Kokosfett, Kuchen, Süßigkeiten und Knabbereien stellen einen erheblichen Risikofaktor dar. Dieses Fett wird für den Cholesterinanstieg im Blut verantwortlich gemacht. Daher wird bislang empfohlen bei tierischen Varianten zu fettarmen Produkten zu greifen. Mit der erfindungsgemäßen Rohmasse lassen sich nun klassische Produkte wie beispielsweise Wurst realisieren, die zum einen einen hohen Proteingehalt und zum anderen einen hohen Gehalt an mehrfach ungesättigten Fettsäuren aufweisen.

Mehrfach ungesättigte Fettsäuren, die beispielsweise in Fischöl reichlich vorhanden sind, reduzieren auch die Rate an plötzlichem Herztod. Die Infusion mehrfach ungesättigter Fettsäuren (beispielsweise: DHA, EPA) hat einen protektiven Einfluss auf solche Risikopatienten (GISSY-P Investigators Study; Lancet).

Die erfindungsgemäße Rohmasse eignet sich besonders für die Herstellung von Fitnessprodukten und Nahrung für Kraftsportler. Je weniger Kohlenhydrate und je mehr Eiweiß man isst, desto konstanter bleibt der Blutzuckerspiegel (glykämischer Index). Ferner begünstigt eine eiweißreiche Kost die Fettverbrennung. Auch ist wichtig in diesem Zusammenhang, dass der Körper Muskelmasse aus Eiweiß aufbaut. Eiweiß kann der Körper aber nicht speichern. Es muss daher bei Kraftsportlern täglich zugeführt werden. Durch eine ausreichende Eiweißversorgung in Kombination mit Krafttraining wird die Muskulatur gestrafft, Fett abgebaut und das Bindegewebe gestärkt. Muskelmasse kann offenbar optimal aufgebaut werden, wenn etwa 90 Minuten vor dem Krafttraining Eiweiß aufgenommen wird. Dazu musste bislang zu Nahrungsmitteln wie Salat mit Fisch oder Pute, Fisch mit Gemüse oder Eiweißshake mit L-Carnitin und L-Arginin gegriffen werden.

Fleischbrät im Sinne der Erfindung umfasst zum einen feinteiliges Brät (beispielsweise aus einem Kutter) aber auch Hackbrät oder grobes Brät (beispielsweise aus einem Fleischwolf).

Das Nahrungsmittel im Sinne der Erfindung umfasst Tiernahrungsmittel und Nahrungsmittel für Menschen.

Fleischersatz im Sinne der Erfindung kann beispielsweise Tofu (Soja), Lupine, Erbse, Buchweizen, Grünkern oder Kartoffel umfassen oder daraus bestehen.

Das Fleisch besteht vorzugsweise aus fettarmem Fleischfilet und/oder Muskeifleisch und/oder Fleisch aus der Schulter.

**Der** Gehalt an pflanzlichem ALA und/oder STA (Triglycerid und/oder Ethylester) pro 100 g Fleisch **beträgt** mindestens 0,2 g bis 1 g, insbesondere mindestens 0,5 g.

Die hierbei notwendige Fettsäure ist eine Omega-3-Fettsäure und in tierischen Produkten natürlicherweise nicht vorhanden. Durch die Anreicherung von Nahrungsmitteln mit dieser Fettsäure, beispielsweise durch Zusatz von bestimmten Pflanzenölen (Triglyceride und/oder Ethylester), kann die der Erfindung zu Grunde liegende Aufgabe gelöst werden.

Vorzugsweise enthält die Rohmasse 0,05 bis 10 Gewichtsteile eines Klebers aus Fisch und Pflanzenprotein sowie Pflanzenöl, wobei der Kleber Fisch und Pflanzenprotein und mindestens 10 Gew. %, insbesondere mindestens 25 Gew. % Pflanzenöl enthält. Der Kleber im Sinne der Erfindung sorgt nicht nur für eine angenehme Textur des Nahrungsmittels und einen guten Zusammenhalt der verschiedenen Zutaten, sondern kann durch die bestimmte Zusammensetzung des Klebers das Nahrungsmittel hauptsächlich auch in seiner gesundheitsfördernden Wirkung veredeln.

Das Fischfleisch des Klebers entstammt ebenfalls der Spezies clarias garipinus und/oder hetero-branchus longifilis einschließlich deren Kreuzungen, aufgrund deren idealen und konkurrenzlosen Eigenschaften.

Der Kleber enthält vorzugsweise 30 bis 70 Gew. % einer Grundemulsion, die 40 bis 70 Gew. % Fleisch und/oder Fisch, 20 bis 50 Gew. % Wasser und/oder Eis sowie 5 bis 15 Gew. % Fettanteile vom Fisch und/oder Pflanzenöl enthält. Die Fettanteile vom Fisch resultieren beispielsweise aus den sogenannten Fischlocken. Fischlocken sind die fetthaltigen Bauchlappen der Fische. Besonders bevorzugt enthält die Grundemulsion 50 bis 65 Gew. % Fisch und unabhängig davon besonders bevorzugt 25 bis 40 Gew. % Wasser und/oder Eis.

Der Kleber im Sinne der Erfindung ist eine Zusammensetzung, die das Produkt veredelt und gleichzeitig die Konsistenz oder Textur des Produkts positiv beeinflusst.

Der Kleber wurde entwickelt, um neben der Optimierung der Fleischbrätkonsistenz (Klebereigenschaft) und Geschmacksverbesserung vorzugsweise eine zusätzliche Eigenschaft aufzuweisen, nämlich die aktive Modulierbarkeit der Relationen zwischen EPA und DHA, Veredelung bzw. Anreicherung des Fleischmixbräts (natürlicher Matrix mit natürlichem [Triglyceride] beinhaltend) spezifischem Omega-3-Fettsäuren-Ethylester EPA und DHA sowie vorzugsweise der zusätzlich fischuntypischen, pflanzlichen ALA und/oder STA (C 18:3 und/oder 18:4; auf Tryglycerid- und/oder Ethylesterbasis) und dies jeweils in einem Verhältnis von 2 bis 10, insbesondere im optimalen Mischungsverhältnis 5 Anteile Alpha-Linolsäure zu 1 Teil EPA/DHA. Während des Stufen-Herstellungsprozesses entsteht beispielsweise durch das "Aufschließen" - bedingt durch eine sehr hohe Rotationsgeschwindigkeit/min beim Mischungsvorgang - eine optimale Verteilung bzw. "Aufsaugen" (Anreicherung) von den entsprechenden essentiellen ethylisierten Omega-3-Fettsäuren. Sollte beim Emulgieren und Analyseprozess der entsprechende Anteil bzw. der individuelle Anteil der jeweiligen essentiellen Fettsäuren zu gering sein, so können die einzelnen Emulsionen durch entsprechende Ölderivate (Tryglycerid- und/oder Ethylesterbasis) jederzeit optimiert werden. Bei den Versuchsreihen hinsichtlich des Veredelungsprozesses konnte überraschenderweise festgestellt werden, dass auch zusätzlich zugeführte Ölderivate sowie tierische und pflanzliche Proteine sehr gut in den Emulsionsprozess eingearbeitet werden können. Insbesondere bei der Emulsion F-Konzentration (= Fischöle; fischölhaltiger Arm b) erreicht man durch das "Aufschließen' eine signifikant höhere Konzentration an EPA und DHA aus dem Fischgewebe (z.B. der beträgt der Omega-3-Ethylesteranteil in 100g normalem Fleisch < 0,01 Gew. %; im erfindungsgemäßen Kleber beträgt der Anteil jedoch beispielsweise mindestens 5 Gew. %) und dennoch "bricht" die Emulsion nicht zusammen.

Der Kleber umfasst weiterhin vorzugsweise einen pflanzenölhaltigen Teil (a) und einen fischölhaltigen Teil (b), wobei
- das Gewichtsverhältnis des pflanzenölhaltigen Teils (a) zum fischölhaltigen Teil (b) in einem Bereich von 3:1 bis 15:1 liegt,
- der pflanzenölhaltige Teil (a) 40 bis 90 Gew. % Pflanzenöl und 10 bis 60 Gew. % Grundemulsion enthält, und
- der fischölhaltige Teil (b) 40 bis 75 Gew. % Fischöl und 25 bis 60 Gew. % Grundemulsion enthält.

Das Gewichtsverhältnis des pflanzenölhaltigen Teils (a) zum fischölhaltigen Teil (b) liegt vorzugsweise in einem Bereich von 5:1 bis 10:1.

Besonders bevorzugt ist es gemäß der vorliegenden Erfindung, wenn der pflanzenölhaltige Teil (a) 45 bis 70 Gew. % Pflanzenöl und 30 bis 55 Gew. % Grundemulsion enthält. Unabhängig davon ist es weiterhin besonders bevorzugt, wenn der fischölhaltige Teil (b) 45 bis 65 Gew. % Fischöl und 35 bis 55 Gew. % Grundemulsion enthält.

Die Rohmasse oder der Kleber jeweils enthält vorzugsweise wenigstens ein wasserlösliches Antioxidans, insbesondere Zitronensäure und/oder Ascorbinsäure. Besonders eine Kombination aus Zitronensäure und Ascorbinsäure ermöglicht die Herstellung besonders oxidationsstabiler Emulsionen.

Das Pflanzenprotein enthält vorzugsweise Proteinisolate aus Lupine und/oder Erbsen. Vorteilhaft ist dabei, dass bei der Verwendung von Proteinisolate trotz der pH-Wertabsenkung und der damit verbundenen verschlechternden Löslichkeit von Proteinen durch die Zugabe der Zitronensäure und/oder Ascorbinsäure dennoch eine gute Emulgatorwirkung vorhanden ist.

Der Begriff "Fischfleisch" im Sinne der Erfindung bezieht sich ausschließlich auf die beiden Spezies clarias garipinus und/oder heterobranchus longifilis. Exakt diese Fischspezies entsprechen vollends den gesuchten Eigenschaften. Insbesondere die hohen Bindeeigenschaften führen dazu, dass man auf zusätzliche herkömmliche Bindemittel chemischer Natur teilweise oder vollständig verzichten kann.

Die Rohmasse zur Herstellung eines erfindungsgemäßen Nahrungsmittels **(Fleischbrät)** enthält Fleisch und/oder Fleischersatz, das jeweils vorzugsweise 50 bis 90 Gewichtsteile Fleischmasse und 5 bis 20 Gewichtsteile Pflanzenöl enthalten kann. Vorteilhafterweise sind hier in der Rohmasse auch 5 bis 20 Gewichtsteile Eis enthalten, damit die Rohmasse beispielsweise bei der Zerkleinerung in einem Kutter weiterverarbeitet werden kann.

Insgesamt stammt die Fleischmasse zur Herstellung der Rohmasse wie beispielsweise Fleischbrät oder Fleischhackbrät aus fettarmen Fleischteilen, wie beispielsweise Filet, Schulter und/oder Muskelfleisch.

Der erfindungsgemäßen Rohmasse können vorzugsweise 0,1 bis 10 Gewichtsteile Eiweiß, insbesondere als Konzentrat in Form 4-Komponenten-Eiweiß aus Milch, Molken- [Lactalbumin, Lactglobulin] Hühner- und Pflanzen-Eiweiß (beispielsweise: Soja, Lupine, Erbse, Kartoffel) zugesetzt werden.

Diese hochwertigen Proteinquellen eignen sich besonders für Fitnessprodukte und den Kraftsport. Während Nichtsportler pro Tag 0,8 g Protein pro kg Köpergewicht aufnehmen sollten, sind es bei einem Kraftsportler bereits 1,8 bis 2,5 g. Das bedeutet, dass ein 90 kg schwerer Bodybuilder beispielsweise 225 g Protein pro Tag aufnehmen müsste, was einer Menge von 1,3 kg Rindfleisch entspricht. Mit der erfindungsgemäßen Rohmasse ist es nun möglich, den Eiweißbedarf effizienter zu decken. **Die** erfindungsgemäße Rohmasse kann durch die Anreicherung mit hochwertigem Eiweiß als Proteinkonzentrat eingesetzt werden. Die natürliche Konzentration an Eiweiß in bislang bekannten vergleichbaren Produkten beträgt etwa 16 bis 21 Gew. %. Mit der erfindungsgemäßen Rohmasse kann durch Hinzufügen des pflanzlichen und/oder tierischen Eiweißes eine erheblich höhere Konzentration erreicht werden.

In einer weiteren Ausführungsform wird die der Erfindung zugrunde liegenden Aufgabe gelöst durch ein Verfahren zur Herstellung **einer Rohmasse, die** dadurch gekennzeichnet ist, dass man **diese** zerkleinert, gründlich durchmischt, beispielsweise in Därmen abfüllt und über einen Zeitraum von 30 bis 240 min auf eine Temperatur von 40 bis 85 °C erhitzt.

Vorzugsweise zerkleinert man eine Rohmasse, die 50 bis 90 Gewichtsteile Fleischmasse enthält, durchmischt sie gründlich und erhitzt sie über einen Zeitraum von 30 bis 240 min auf eine Temperatur von 40 bis 85 °C. Vorteilhafterweise wird diese anschließend zum fertigen Produkt verpackt.

Vorzugsweise gibt man nach der Zerkleinerung noch 5 bis 20 Gewichtsteile Pflanzenöl zu der Rohmasse hinzu. Nach der Zerkleinerung wird die Rohmasse beispielsweise durch den erfindungsgemäßen vorgenannten Kleber veredelt.

Das erfindungsgemäße Verfahren eignet sich beispielsweise zur Herstellung von Tiernahrung oder Nahrung für Menschen wie Hackfleisch, Fischstäbchen, Döner, Wurstwaren wie Rohwürsten, Brühwürsten, Kochwürsten, Kochstreichwürsten, Frikadellen, Burgern, Fitnessprodukten oder Pasteten. Das erfindungsgemäße Verfahren sieht also vor, dass Fleischmasse als Hauptbestandteil verwendet wird. Alternativ ist es jedoch auch möglich vollständig auf Fleisch zu verzichten, wenn Fleischersatz eingesetzt wird. Zudem können dem Verfahrensprodukt beim Herstellungsverfahren beispielsweise noch Supplemente wie Vitamine, Mineralien, Spurenelemente, Enzyme und/oder pharmazeutisch wirksame Substanzen hinzugemengt werden, um den medizinischen bedarfsgerechten Nutzen zu optimieren.

Es handelt sich um ein Verfahren, dass zur Herstellung von Lebensmitteln bzw. Tiernahrung Fleisch und/oder rein pflanzliche Ausgangsstoffe, Fisch oder auch gegebenenfalls zusätzliches Eiweißkonzentrat verwendet **wird.**

Mit dem vorliegenden Verfahren werden beispielsweise fettarme Fleischprodukte (Rohwürste, ... s.o.) aus Fleischbrät hergestellt, die fischgeschmacks- und fischgeruchsneutral sind und insbesondere über ausreichend (therapeutischen Nutzen) essentieller Fettsäuren (EPA und DHA [Ethylesterbasis] aber auch über die nur in Pflanzen vorkommende Omega-3-Fettsäuren [ALA und/oder STA] verfügen. Dabei soll vorzugsweise in der natürlichen "Veredelung" ( im Sinne von Anreicherung) des Fleischbräts das von führenden Wissenschaftlern (siehe Muttermilch Mischungsverhältnis Omega-3-Fettsäuren und Konzentrationen) jeweils empfohlene Mischungsverhältnis zwischen ALA und STA vs. EPA und DHA, aber auch zwischen EPA und DHA (dies ist nur möglich, durch Verwendung von "reinem" Ethylester der Omega-3-Fettsäuren) berücksichtigt werden. Diese so genannte natürliche Art der Veredelung der Fleischmixprodukte wird bei regelmäßigem Verzehr einen evident positiven, gesundheitsfördernden bzw. -erhaltenden Effekt erzielen. Ferner soll dadurch die Veredelung der Fleischmixprodukte an Omega-3-Fettsäuren-Ethylester eine derart hohe Konzentration je nach Bedarf erzielt werden, damit eine bei chronisch Erkrankten gesundheitsfördernde Therapie eingeleitet werden kann. Außerdem weisen sämtliche Fleischmixprodukte vorzugsweise eine Konsistenz auf, die sehr fest und dennoch geschmeidig ist, wobei die Fleischprodukte lange haltbar bleiben sollen.

Das/Die Pflanzenproteinisolat/e wird/werden mit Wasser und wasserlöslichen Antioxidantien (Ascorbinsäure und/oder Zitronensäure) in der Grundemulsion vorteilhafterweise in einer Kolloidmühle und einer ZahnkranzDispergiermaschine verarbeitet.

Vorteilhafterweise werden der Rohmasse essentielle Pflanzenöle und/oder Fischöle zugegeben. Dadurch können die im Stand der Technik erwähnten Nachteile der Entstehung von Krankheiten noch einfacher beseitigt werden.

Die Zerkleinerung der Rohmasse beispielsweise zu Fleischbrät oder Fleischhackbrät geschieht vorzugsweise in einem Kutter, Fleischwolf und/oder einer Fleischaufschlussvorrichtung. Bei dem Kuttervorgang setzt man beispielsweise eine Scherrate in einem Intervall von 1000 bis 3000 s⁻¹ ein.

Vorzugsweise wird ein Teil der Rohmasse gewolft und der restliche Anteil geschrotet. Dadurch wird eine besonders grobkörnige Textur erreicht, die den bisher bekannten Fleischprodukte besonders ähnlich ist.

Im erfindungsgemäßen Verfahren setzt man bevorzugt gefrorene Fleischmasse oder gefrorenes Fleisch oder gefrorenen Fisch ein. Insbesondere kann die Fleischmasse sowohl in gefrorenem als auch in aufgetautem Zustand verarbeitet werden. Dadurch kann auch ohne Zusatz von Eis die Zerkleinerung der Rohmasse beispielsweise in einem Kutter stattfinden.

Im erfindungsgemäßen Verfahren setzt man vorteilhafterweise eine Rohmasse mit einem Gehalt von Pflanzenöl von mindestens 5 Gew. % ein. Dadurch können die gerade in Pflanzenöl enthaltenden mehrfach ungesättigten Fettsäuren verstärkt in die **erfindungsgemäße Rohmasse** eingebracht werden. Als Pflanzenöl eignen sich daher besonders Walnussöl, Rapsöl, Leinsamenöl, Chiaöl, Hanföl, Sojaöl, Perillaöl; Öle aus der Pflanzenfamilie Boraginaceae, Johannisbeersamenöl oder eine Mischung aus mindestens zwei dieser Öle. Jede Kombination von zwei der genannten Öle ist daher besonders bevorzugt. Gerade zu Fleischhackbrät können auch zur verbesserten Bindung zerkleinerte Semmelbrösel (Paniermehl) eingesetzt werden. Der Rohmasse, insbesondere dem Fleischbrät oder dem Fleischhackbrät können auch denaturierte Pflanzenproteine (beispielsweise Soja, Lupine, Kartoffel, Erbse, Hirse oder Grünalgen) und/oder Molkeproteine (Milcheiweiß) zugeben werden.

Im erfindungsgemäßen Verfahren können der Rohmasse auch folgende Zutaten zugefügt werden: Phosphat, Salz, Nitritpökelsalz, Gemüse, Brühe, L-Carnitin-enthaltende Substanzen, Aromastoffe, Geschmacksträger, natürliche Supplemente wie beispielsweise Vitamine, Mineralstoffe und Spurenelemente, probiotische Bakterien, synthetische Supplemente, pharmazeutisch wirksame Substanzen, medikamentenähnliche Substanzen wie beispielsweise L-Carnitinenthaltende Substanzen (beispielsweise L-Carnitin nach dem natürlich biologischen Carnipure^{®} Verfahren oder aus dem Liebig'schen Extrakt und nicht durch das unnatürlich chemisch hergestellte D-Carnitin) oder Texturierungsmittel wie beispielsweise Paniermehl. Gerade L-Carnitin kann die Fettverbrennung unterstützen. Daher wird oft empfohlen, etwa 1 g L-Carnitin 30 Minuten vor dem Sport aufzunehmen. Dank seiner wichtigen und grundlegenden Funktionen im Energiestoffwechsel können insbesondere Ausdauer-, Kraft- und Hobbysportler, Menschen, die eine Diät zur Gewichtsreduktion durchführen, Schwangere und Stillende, insbesondere Senioren, Vegetarier, Diabetiker, allgemein Menschen, die ihre Gesundheit fördern und erhalten wollen, 1 bis 3 g/Tag mit der Nahrungsaufnahme zu sich nehmen.

In einer weiteren Ausführungsform wird die der Erfindung zugrunde liegenden Aufgabe gelöst durch **eine Rohmasse,** das nach dem erfindungsgemäßen Verfahren herstellbar ist. Vorzugsweise beträgt der ω-3-Fettsäuregehalt mindestens 1 Gew. %, insbesondere mindestens 5 Gew. %, ganz besonders bevorzugt mindestens 10 Gew. %, bezogen auf **die Rohmasse** beträgt. Dadurch kann **die erfindungsgemäße Rohmasse** bei im Vergleich zu reinen Fleischprodukten gleichbleibendem Geschmack Zivilisationskrankheiten wie Arteriosklerose vorbeugen, indem die ω-3-Fettsäuren (gewonnen aus den essentiellen Fischbestandteilen) die für die Konsumenten gesundheitslaeeinträchtigenden ω-6-Fettsäuren (Arachidonsäure, klassische, fetthaltige Wurstsorten) verdrängt, sogar deren Umwandlung zu den Entzündungsstoffen verhindert, so dass der Bildung des gesundheitsgefährdenden Thrombaxen (Entzündungsstoff) direkt entgegengewirkt wird.

Das Nahrungsmittel **(Fleischbrät)** enthält vorteilhafterweise 5 bis 20 Gewichtsteile Pflanzenöl und 5 bis 90 Gewichtsteile Fleischmasse. Vorteilhafterweise sind mindestens 50 Gewichtsteile, insbesondere mindestens 60 Gewichtsteile Fleischmasse enthalten. Vorteilhafterweise ist das Pflanzenöl mit der Fleischmasse homogen vermengt, so dass zumindest mit dem bloßen Auge Pflanzenöl nicht von der Fleischmasse unterschieden werden kann. Dieses erfindungsgemäße Nahrungsmittel **(Fleischbrät)** ist vorzugsweise so ausgestaltet, dass es den gleichen Geschmack wie handelsübliche, mit Leerfetten versetzte Fleischprodukte aufweist. Je nach Bedarf können auch diverse Fleischaromen beigemengt werden. Dadurch kann das erfindungsgemäße Nahrungsmittel **(Fleischbrät)** bisher angebotene Fleischprodukte ersetzen und die im Stand der Technik beschriebenen Nachteile ausgleichen.

Das erfindungsgemäße Nahrungsmittel **(Fleischbrät) eignet sich** zudem vorzugsweise **zur Herstellung von** Hackfleisch, Fischstäbchen, **einer** Frikadelle, **eines Drehspießes** wie beispielsweise Döner, **einer** Teigfüllung, wie beispielsweise für Maultaschen, **einer** Wurst, **einem** Burger oder **einer** Pastete.

In einer weiteren Ausführungsform wird die der Erfindung zugrunde liegende Aufgabe gelöst durch die Verwendung der erfindungsgemäßen Rohmasse zur Herstellung von Tiernahrung oder Nahrung für Menschen wie Hackfleisch, Fischstäbchen, Döner, Drehspieße, Würste, Frikadellen, Burger, Pasteten oder Teigfüllungen wie beispielsweise Maultaschen.

Man erhält den Kleber vorteilhafterweise durch Mischung wenigstens eines Öls und denaturiertes Pflanzenprotein oder Fischfleisch zu einer Grundemulsion, die man zunächst in einem rotierenden Behältnis bei einer Rotationsgeschwindigkeit in einem Bereich von 5.000 bis 25.000 Umdrehungen/Minute, insbesondere 10.000 bis 20.000 Umdrehungen/Minute herstellt. Dieser Vorgang wird auch als Aufschließen der Grundemulsion bezeichnet.

Das Einbringen wenigstens eines Pflanzenproteinisolats (Lupine, Erbse, Kartoffel, Alge, Soja, Bohne, Linsen) erfolgt beispielsweise mittels eines Wendelrührers oder einer Kolloidmühle, das optionale Einbringen von Omega-3-Fettsäuren in den Kleber aus Pflanzenöl und fett-oder öllöslichem Antioxidans erfolgt bevorzugt unter Schutzgasatmosphäre, welche durch Ausschluss von Sauerstoff und beispielsweise 80% N₂ und 20% CO₂ charakterisiert ist.

Die Wasser-Fisch-Protein-Antioxidans-Mischung wird in einer Dispergiereinheit (entweder Zahnkranzdispergiermaschine oder Kolloidmühle) vorgelegt. Die Mischung wird im Kreis gepumpt, zugleich wird kontinuierlich die Öl-Mischung zu dosiert. Durch die Dispergiereinheit wird die Ölphase homogen in der "wässrigen" Phase verteilt und emulgiert. Dieser Prozess findet möglichst bei Temperaturen unter 20 °C, besser unter 10 °C statt.

Im erfindungsgemäßen Verfahren wird die Grundemulsion beispielsweise zunächst in zwei Teile gesplittet und anschließend jeder Teil mit Pflanzenöl beziehungsweise Fischöl versetzt, um jeweils den pflanzenölhaltigen Teil beziehungsweise den fischölhaltigen Teil zu erhalten.

Teil der Erfindung ist auch die Einbringung wenigstens eines fett- oder öllöslichen Antioxidans in den Kleber zur Bildung einer Mischung aus Pflanzenöl, -protein, Fischfleisch, Omega-3-Ethylester und fett- oder öllöslichem Antioxidans, wobei insbesondere das Einbringen von Omega-3-Fettsäureethylester in die Mischung des Klebers unter Schutzgasatmosphäre erfolgt.

Die Herstellung der Grundemulsion kann beispielsweise durch Vermischen der Grundstoffe in einem Homogenisator oder in einem Hochdruckhomogenisator erfolgen.

Der Kleber wird dann in dem Homogenisator oder Hochdruckhomogenisator homogenisiert. Dabei werden die zuvor gleichmäßig verteilten Öltröpfchen stark zerkleinert und stabilisiert. Die nach dem Homogenisier-Prozess entstandene Emulsion wird möglichst kühl, unter Licht- und Sauerstoffausschluss zur weiteren Verwendung gelagert bzw. analog direkt in das Fleischgemisch eingebracht.

### Ausführungsbeispiele:

### Beispiel 1:

### Herstellung von Fisch-Rindwurst (Fitness-Brühwurst - Lyoner Art)

| Zutat | Menge [Gew. %] | Menge [g] |
|---|---|---|
| Fleisch, Rind, mager | 28,14 | 6,000,00 |
| Fleisch, Fisch | 37,52 | 8.000,00 |
| Eis, -20 bis -50°C. | 15,95 | 3.400,00 |
| Nitritpökelsalz | 0,89 | 190,00 |
| Phosphat | 0,25 | 52,50 |
| Gewürze | 0,53 | 114,00 |
| Kleber* | 3,99 | 850,00 |
| Antioxidantien (Zitronensäure und Ascorbinsäure) | 0,35 | 75,00 |
| Eiweißkonzentrat in Form 4-Komponenten-Eiweiß (90%) | 8,82 | 1880,00 |
| L-Carnitin | 0,89 | 190,00 |
| L-Arginin | 2,67 | 570,00 |
| Gesamt [g] | 100,00 | 21.321,50 |
| Kutterdrehzahl [U/min] | 1800 | |
| Kutterzeit [min] | ca. 8 | |
| erreichte Temp. [°C] | 8 | |
| | | |
| Zugabe des Klebers nach 2/3 der Kutterzeit | | |
| Mischen | | |
| Füllen | | |
| Brühtemperatur [°C] | 72 | |
| Brühzeit [min] | 120-150 | |
| Kühltemperatur [°C] | 6 | |

| | | |
|---|---|---|
| *siehe Beispiel 4 | | |

### Beispiel 2:

### Herstellung einer Fisch- ,Soja- u. Schweinefleischwurst mit Erbsenprotein

| Zutat | Menge [%] | Menge [g] |
|---|---|---|
| Fleisch, Fisch | 36,47 | 7.000,00 |
| Fleisch, Schwein | 31,26 | 6.000,00 |
| Fleisch, Soja | 10,42 | 2.000,00 |
| Eis, -20 - -50°C | 15,63 | 3.000,00 |
| Nitritpökelsalz | 0,68 | 130,00 |
| Gewürze | 0,09 | 18,00 |
| Kleber* | 5,05 | 970,00 |
| Antioxidans (Zitronensäure und Ascorbinsäure) | 0,40 | 76,39 |
| | | |
| Gesamt [g] | 100,00 | 19.194,39 |

| | |
|---|---|
| Kutterdrehzahl [U/min] | 1700 |
| Kutterzeit [min] | ca. 8 |
| erreichte Temp. [°C] | 08 |
| | |
| Zugabe des Klebers nach 2/3 der Kutterzeit | |
| Mischen | |
| Füllen | |
| | |
| Brühtemperatur [°C] | 72 |
| Brühzeit [min] | 120-150 |
| Kühltemperatur [°C] | 6 |

| | |
|---|---|
| *Siehe Beispiel 4 | |

### Beispiel 3:

### Herstellung einer Fisch-Rindfrikadelle

| Zutat | Menge [Gew. %] | Menge [g] |
|---|---|---|
| Fleisch, Rind, mager | 53,99 | 7.000,00 |
| Fleisch, Fisch | 23,14 | 3.000,00 |
| Eis, -20 bis -50°C | 9,26 | 1.200,00 |
| Semmelbrösel (Paniermehl) | 2,31 | 300,00 |
| Eier | 3,86 | 500,00 |
| Gewürze | 0,88 | 114,00 |
| Kleber* | 6,56 | 850,00 |
| | | |
| Gesamt [g] | 100,00 | 12.964 |

| | |
|---|---|
| Kutterdrehzahl [U/min] | 750 |
| Kutterzeit [min] | ca. 8 |
| erreichte Temp. [°C] | 8 |
| | |
| Zugabe des Klebers nach 1/3 der Kutterzeit | |
| Mischen | |
| Portionierung | |
| Verpackung | |
| evtl. Schockgefrierung | -20 °C |
| | |
| Kühltemperatur [°C] | 6 |

| | |
|---|---|
| *siehe Beispiel 4 | |

### Beispiel 4:

### Kleber (=veredelte Emulsionen) hergestellt wie folgt:

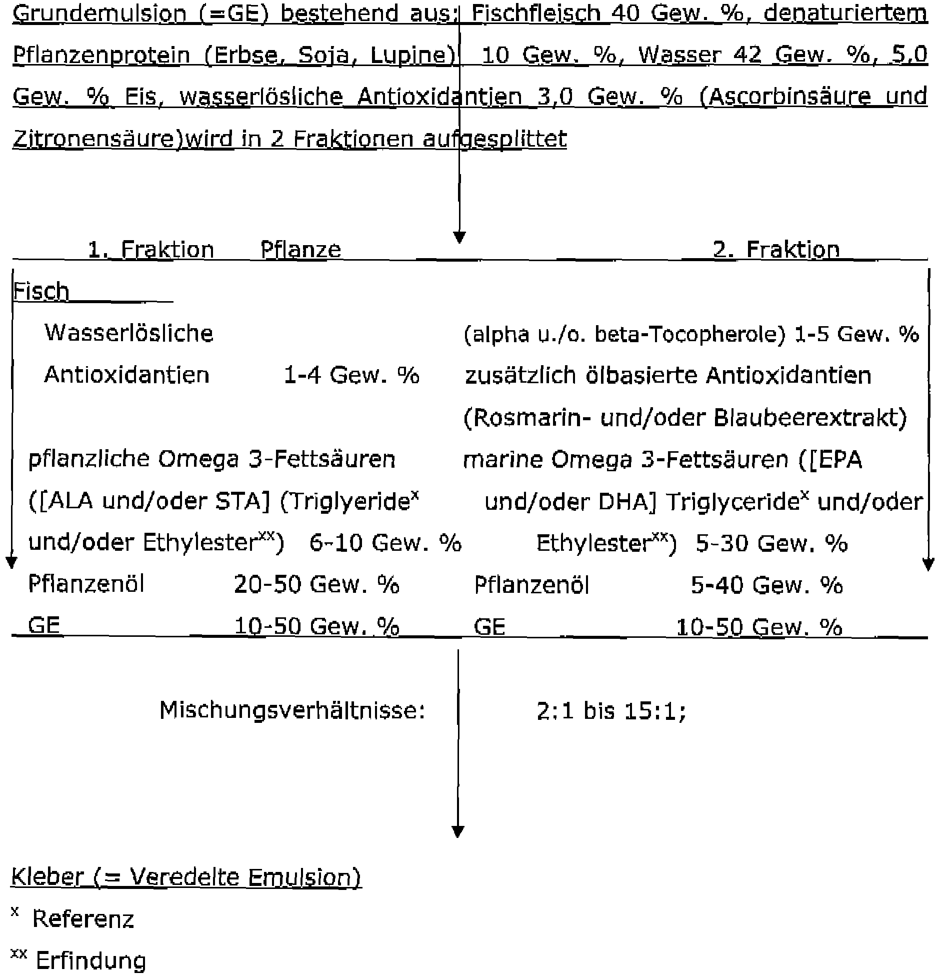

### Herstellung einer Ausführung von 100g Kleber mit 10 % Omega-3-Fettsäure (Triglycerid^{x} und/oder Ethylester^{xx});

### Grundemulsion:

Schritt A
   1. Zunächst wurden 42g Wasser auf mind. 20 °C bis max. 80 °C erwärmt.
   2. Anschließend wurden 1,0g Zitronensäure und 2,0g Ascorbinsäure in das Wasser gerührt.
   3. Einmischen von 10g Pflanzenproteinisolat u./o. -isolaten mittels einer Kolloidmühle, Abstand Rotor/Stator 1mm, Mischzeit 5 Minuten, Kühlung bei 20 °C.
Schritt B
   4. Zerkleinern von 40g Fischfleisch und/oder Fleisch mit 5g Eis im Kutter bei 1.700 U/min, bei ansteigender Temperatur bis max. 9 °C.
Schritt C = Vermengung von Schritt A und B
   5. Vorlegen der emulgierten Pflanzenlösung in einer Zahnkranzdispergiereinheit), Einmischen des zerkleinerten Fischs- und/oder der Fleischemulsion zur Emulgierung einer Gesamtmasse.

### 1. Fraktion (46 Gew. % Grundemulsion), Pflanzenbasis

1. Vorlegen von 50g Rapsöl, Einmischen von 4,0 Gew. % wasserlösliche Antioxidantien (Zitronensäure und/oder Ascorbinsäure) mittels einer Labor-Zahnkranzdispergiemaschine, 3 min bei 15.000U/min, T= 20 °C.

### II. Fraktion (38 Gew. % Grundemulsion), Fischbasis

1. Vorlegen von 30g Rapsöl, Einmischen von alpha u./o. beta-Tocopherolen 1-(5 Gew. %) sowie 2,0g Rosmarin und/oder Blaubeerextrakt mittels einer Labor-Zahnkranzdispergiemaschine, 3 Minuten bei 15.000U/min, T= 20 °C, Einmischen von 30g Omega-3-Fettsäuren (Triglyceride^{x} und/oder Ethylester^{xx} [Omega 3>90 % EE]) beo 9.000 U/min für 1 Minute bei 20°C. Fertigstellung Kleber im Verhältnis 2:1 (Endemulsion, je nach Bedarf)
   1. Vorlegen der Fraktion auf Pflanzenbasis in einer Zahnkranz Dispergiereinheit,, Einmischen und Emulgierung der Fraktion auf Fischbasis unter 700 mbar Vakuum, 15 °C für 20 Minuten bei einer Umdrehungszahl von 4.500 U/min.
   2. Homogenisierung des Klebers mittels eines Hochdruckhomogenisators bei 500 bis1.500 bar, einstufig, Temperatur 15-20 °C.
   3. Evtl. Abpackung des Klebers unter Vakuum oder Schutzgas (80% N2, 20% CO2), Kühlen bei 1 °C.

## Patentansprüche

1. Rohmasse zur Herstellung von Fleischbrät enthaltend
a) 3 bis 15 Gewichtsteile Fleisch und/oder Fleischersatz,
b) 0,01 bis 20 Gewichtsteile Fisch der Spezies clarias garipinus und/oder heterobranchus longifilis einschließlich deren Kreuzungen,
c) 1 bis 5 Gewichtsteile Eis und/oder Wasser,
d) mindestens 0,2 g pflanzliche alpha-Linolensäure und/oder Stearidonsäure pro 100 g Fleisch und/oder Fleischersatz in Form der Triglyceride und/oder Fettsäureethylester und
wobei die Rohmasse
mindestens 0,2 g Docosahexaensäure und/oder Eicosapentaensäure in Form deren Ethylester pro 100g Fleisch und/oder Fleischersatz und
0,05 bis 10 Gewichtsteile eines Klebers aufweist, der Fisch und Pflanzenprotein und mindestens 10 Gew. % Pflanzenöl enthält.

2. Rohmasse nach Anspruch 1, **dadurch gekennzeichnet, dass** sie zusätzlich 0,1 bis 10 Gewichtsteile Eiweißkonzentrat in Form von 4-Komponenten-Eiweiß aus Milch, Molkenprotein [Lactalbumin, Lactoglobulin] Hühner- und Pflanzen-Eiweiß, insbesondere aus Soja, Lupine, Erbse, und/oder Kartoffel) und/oder Trockenel enthält.

3. Rohmasse gemäß Anspruch 1, **dadurch gekennzeichnet, dass** sie zusätzlich 0,001 bis 1,0 Gewichtsteile Vitamin D und/oder freie Aminosäuren L-Carnitin und/oder L-Arginin enthält.

4. Rohmasse gemäß einem der Ansprüche 1 bis 3, **dadurch gekennzeichnet, dass** sie zusätzlich wenigstens ein wasserlösliches und/oder ölbasierendes Antioxidans enthält.

5. Rohmasse gemäß einem der Ansprüche 1 bis 4, **dadurch gekennzeichnet, dass** der Kleber 30 bis 70 Gew. % einer Grundemulsion enthält, wobei die Grundemulsion
- 40 bis 70 Gew. % Fisch und/oder Fleisch,
- 20 bis 50 Gew. % Wasser und/oder Eis und
- 5 bis 15 Gew. % Fettanteile vom Fisch und/oder Pflanzenöl enthält.

6. Rohmasse gemäß Anspruch 5, **dadurch gekennzeichnet, dass** der Kleber einen pflanzenölhaltigen Teil (a) und einen fischölhaltigen Teil (b) enthält, wobei das Gewichtsverhältnis des pflanzenölhaltigen Teils (a) zum fischölhaltigen Teil (b) in einem Bereich von 3:1 bis 15:1 liegt,
der pflanzenölhaltige Teil (a) 40 bis 90 Gew. % Pflanzenöl und 10 bis 60 Gew. % Grundemulsion enthält, und
der fischölhaltige Teil (b) 40 bis 75 Gew. % Fischöl und 25 bis 60 Gew. % Grundemulsion enthält.

7. Rohmasse gemäß einem der Ansprüche 2 bis 6, **dadurch gekennzeichnet, dass** man als Pflanzenöl Walnussöl, Rapsöl, Leinsamenöl, Chiaöl, Hanföl, Sojaöl, Perillaöl, Öle aus der Pflanzenfamilie Boraginaceae, Johannisbeersamenöl oder eine Mischung aus mindestens zwei dieser Öle einsetzt.

8. Verfahren zur Herstellung einer Rohmasse gemäß einem der Ansprüche 1 bis 9 7, **dadurch gekennzeichnet, dass** die Bestandteile unter Einsatz eines Kutters und/oder Fleischwolfs zerkleinert werden.

9. Verfahren gemäß Anspruch 8, **dadurch gekennzeichnet, dass** man den Kleber durch Mischung des Öls oder der Öle mit der Grundemulsion erhält, die man zunächst in einem rotierenden Behältnis bei einer Rotationsgeschwindigkeit in einem Bereich von 5.000 Umdrehungen/Minute bis 25.000 Umdrehungen/Minute herstellt.

10. Verfahren **zur Herstellung einer Rohmasse** nach einem der Ansprüche 8 oder 9, **dadurch gekennzeichnet, dass** man die Rohmasse zerkleinert, durchmischt und über einen Zeitraum von 30 bis 240 min auf eine Temperatur von 40 bis 85 °C erhitzt.

11. Verfahren gemäß Anspruch 10, **dadurch gekennzeichnet, dass** man die Grundemulsion in einer Zentrifuge oder einem Kutter herstellt.

12. Verwendung einer Rohmasse nach einem der Ansprüche 1 bis 9 7 als Nahrungsmittel.

13. Verwendung gemäß Anspruch 12, **dadurch gekennzeichnet, dass** der ω-3-Fettsäuregehalt mindestens 1 Gew. %, insbesondere mindestens 5 Gew. %, ganz besonders mindestens 10 Gew. % beträgt.

14. Verwendung gemäß Anspruch 13, **dadurch gekennzeichnet, dass** das Nahrungsmittel für Mensch oder Tier Hackfleisch, Fischstäbchen, Döner, Wurst, Wurstwaren, insbesondere Brühwürste, Kochwürste oder Kochstreichwürste, Frikadellen, Burger, Fitnessprodukte oder Pasteten umfasst.

## Claims

1. A raw composition for preparing sausage meat containing
a) from 3 to 15 parts by weight of meat and/or meat substitute;
b) from 0.01 to 20 parts by weight of fish of the species *Clarias gariepinus* and/or *Heterobranchus longifilis* including their crossbreeds;
c) from 1 to 5 parts by weight of ice and/or water;
d) at least 0.2 g of vegetable alpha-linolenic acid and/or stearidonic acid per 100 g of meat and/or meat substitute in the form of the triglycerides and/or fatty acid ethyl esters; and
wherein the raw composition contains at least 0.2 g of docosahexaenic acid and/or eicosapentaenic acid in the form of ethyl esters thereof per 100 g of meat and/or meat substitute, and from 0.05 to 10 parts by weight of a glue that contains fish and vegetable proteins and at least 10% by weight of vegetable oil.

2. The raw composition according to claim 1, **characterized by** additionally containing from 0.1 to 10 parts by weight of protein concentrate in the form of four-component protein consisting of milk, whey protein [lactalbumin, lactoglobulin], chicken and plant proteins, especially from soybean, lupine, pea and/or potato, and/or dried egg.

3. The raw composition according to claim 1, **characterized by** additionally containing from 0.001 to 1.0 parts by weight of vitamin D and/or free amino acids L-carnitine and/or L-arginine.

4. The raw composition according to any of claims 1 to 3, **characterized by** additionally containing at least one water-soluble and/or oil-based antioxidant.

5. The raw composition according to any of claims 1 to 4, **characterized in that** said glue contains from 30 to 70% by weight of a basic emulsion, wherein said basic emulsion contains:
- from 40 to 70% by weight of fish and/or meat,
- from 20 to 50% by weight of water and/or ice, and
- from 5 to 15% by weight of fat parts of fish and/or vegetable oil.

6. The raw composition according to claim 5, **characterized in that** said glue contains a part containing vegetable oil (a) and a part containing fish oil (b), wherein the weight ratio of the part containing vegetable oil (a) to the part containing fish oil (b) is within a range of from 3:1 to 15:1;
the part containing vegetable oil (a) contains from 40 to 90% by weight of vegetable oil and from 10 to 60% by weight of basic emulsion; and
the part containing fish oil (b) contains from 40 to 75% by weight of fish oil and from 25 to 60% by weight of basic emulsion.

7. The raw composition according to any of claims 2 to 6, **characterized in that** walnut oil, rapeseed oil, linseed oil, chia oil, hemp oil, soybean oil, perilla oil, oils from the Boraginaceae plant family, black currant seed oil, or a mixture of at least two of these oils is employed as said vegetable oil.

8. A process for preparing a raw composition according to any of claims 1 to 7, **characterized in that** the ingredients are comminuted by using a meat cutting machine and/or a meat mincer.

9. The process according to claim 8, **characterized in that** said glue is obtained by mixing said oil or oils with the basic emulsion, which is first prepared in a rotating vessel at a rotational speed within a range of 5,000 rpm to 25,000 rpm.

10. The process for preparing a raw composition according to either of claims 8 or 9, **characterized in that** said raw composition is comminuted, admixed and heated at a temperature of 40 to 85 °C for a period of 30 to 240 min.

11. The process according to claim 10, **characterized in that** said basic emulsion is prepared in a centrifuge or meat cutting machine.

12. Use of a raw composition according to any of claims 1 to 7 as a foodstuff.

13. The use according to claim 12, **characterized in that** the ω-3 fatty acid content is at least 1% by weight, particularly at least 5% by weight, more particularly at least 10% by weight.

14. The use according to claim 13, **characterized in that** said foodstuff for humans or animals comprises minced meat, fish fingers, doner kebab, sausage, sausage products, especially cooked and precooked sausages, spreadable cooked sausages, meatballs, patties, fitness products or meat pies.

## Revendications

1. Composition crue pour préparer de la chair à saucisse, contenant
a) 3 à 15 parties en poids de viande et/ou de substitut de viande,
b) 0,01 à 20 parties en poids de poisson de l'espèce *Clarias gariepinus* et/ou *Heterobranchus longifilis* incluant leurs hybrides,
c) 1 à 5 parties en poids de glace et/ou d'eau,
d) au moins 0,2 g d'acide alpha-linolénique et/ou d'acide stéaridonique végétaux par 100 g de viande et/ou de substitut de viande sous la forme des triglycérides et/ou des esters éthyliques d'acides gras, et
dans laquelle la composition crue contient au moins 0,2 g d'acide docosa-hexaénoïque et/ou d'acide eicosapentaénoïque sous la forme de leurs esters éthyliques par 100 g de viande et/ou de substitut de viande, et 0,05 à 10 parties en poids d'une colle contenant des protéines de poisson et végétales et au moins 10 % en poids d'huile végétale.

2. Composition crue selon la revendication 1, **caractérisée en ce qu'**elle contient en outre 0,1 à 10 parties en poids de concentré protéique sous la forme de protéine à 4 composants consistant en des protéines de lait, de lactosérum [lactalbumine, lactoglobuline], de poule et végétale, notamment provenant de soja, de lupin, de pois et/ou de pomme de terre, et/ou de l'oeuf déshydraté.

3. Composition crue selon la revendication 1, **caractérisée en ce qu'**elle contient en outre 0,001 à 1,0 parties en poids de la vitamine D et/ou des acides aminés libres L-carnitine et/ou L-arginine.

4. Composition crue selon l'une quelconque des revendications 1 à 3, **caractérisée en ce qu'**elle contient en outre au moins un antioxydant hydrosoluble et/ou à base d'huile.

5. Composition crue selon l'une quelconque des revendications 1 à 4, **caractérisée en ce que** la colle contient de 30 à 70 % en poids d'une émulsion de base, l'émulsion de base contenant
- 40 à 70 % en poids de poisson et/ou de viande,
- 20 à 50 % en poids d'eau et/ou de glace, et
- 5 à 15 % en poids de graisses de poisson et/ou d'huile végétale.

6. Composition crue selon la revendication 5, **caractérisée en ce que** ladite colle contient une fraction contenant de l'huile végétale (a) et une fraction contenant de l'huile de poisson (b), dans laquelle le rapport pondéral de la fraction contenant de l'huile végétale (a) à la fraction contenant de l'huile de poisson (b) est comprise entre 3:1 à 15:1,
la fraction contenant de l'huile végétale (a) contient de 40 à 90 % en poids d'huile végétale et de 10 à 60 % en poids d'émulsion de base, et
la fraction contenant de l'huile de poisson (b) contient de 40 à 75 % en poids d'huile de poisson et de 25 à 60 % en poids d'émulsion de base.

7. Composition crue selon l'une quelconque des revendications 2 à 6, **caractérisée en ce que** de l'huile de noix, de l'huile de colza, de l'huile de lin, de l'huile de chia, de l'huile de chanvre, de l'huile de soja, de l'huile de périlla, de l'huile de la famille végétale des boraginacées, de l'huile de pépins de cassis ou un mélange d'au moins deux de ces huiles est utilisé comme ladite huile végétale.

8. Procédé pour préparer une composition crue selon l'une quelconque des revendications 1 à 7, **caractérisé en ce que** les composants sont broyés à l'aide d'un cutter et/ou d'un hachoir.

9. Procédé selon la revendication 8, **caractérisé en ce que** la colle est obtenue en mélangeant l'huile ou les huiles avec l'émulsion de base, qui est préparée d'abord dans un récipient en rotation à une vitesse de rotation comprise entre 5000 rpm et 25000 rpm.

10. Procédé pour préparer une composition crue selon l'une des revendications 8 ou 9, **caractérisé en ce que** la composition crue est broyée, mélangée et chauffée à une température de 40 à 85 °C pendant une durée de 30 à 240 min.

11. Procédé selon la revendication 10, **caractérisé en ce que** l'on prépare ladite émulsion de base dans une centrifugeuse ou dans un cutter.

12. Utilisation d'une composition crue selon l'une des revendications 1 à 7 comme aliment.

13. Utilisation selon la revendication 12, **caractérisée en ce que** la teneur en acides gras oméga-3 est au moins 1 % en poids, notamment au moins 5 % en poids, particulièrement au moins 5 % en poids, tout particulièrement au moins 10 % en poids.

14. Utilisation selon la revendication 13, **caractérisée en ce que** ledit aliment pour l'homme ou pour les animaux comprend de la viande hachée, des batonnets de poisson panés, du döner kebap, des saucisses, des charcuteries, notamment des brühwurst, des kochwurst ou des saucisses cuites à tartiner, des boulettes, des burgers, des produits de fitness ou des pâtes.
